# EUROPEAN PATENT APPLICATION

(11) **EP 1 189 152 A2**
(43) Date of publication of application: **20.03.2002**
(21) Application number: 01122100.9
(22) Date of filing: 14.09.2001
(51) Int. Cl.: G06F 17/30

(54) **Web browser apparatus and method of use thereof**

(30) Priority: 16.09.2000 GB 0022809
(71) Applicant: Pace Micro Technology PLC, Saltaire, Shipley, BD18 3LF (GB)
(72) Inventor: Hodgkinson, Andrew, Cambridge, CB4 1JA (GB)
(74) Representative: Wood, Graham

(57) **Abstract**

Web browser apparatus, typically located in a broadcast data receiver (BDR), and a method of use thereof is provided. The web browser apparatus includes a communications link to an internet service provider, and allows the user selection of an internet site and the generation and rendering of one or a number of pages of the internet site on a display screen connected to or forming part of the BDR. One or more of said web pages typically including one or more images. The BDR includes storage means in which data indicating the size or sizes of one or more images used in a selected internet site web page is/are extracted from the web page data using the web browser apparatus and stored in the storage means.

## Description

The invention to which the application relates is to web browser apparatus for improving the utility of an internet service to a user in terms of improving the speed of access to a user selected internet site and the display of the "pages" of the site to the user.

An internet service is provided to a user via communication apparatus which can come in several forms but is generally referred to as "Web browsers". The apparatus can come in two general forms, the first being desktop-based apparatus and the other being apparatus which is "embedded" in "host" apparatus such as a broadcast data receiver. In whichever case, all forms of apparatus face the same problem when browsing the internet in response to user internet site selections and this is the speed of the service in obtaining the desired pages of the selected internet site. In addition to the time taken to actually download page data, formatting the data into a displayable form can also require significant amounts of processor power and random accessory memory (RAM) and, where the power is not sufficient, the speed of the process is significantly and, for the user, frustratingly, lengthened.

At the present time it is known for web browser apparatus to implement caches or to include storage means which store page data and/or image data of previously visited internet site pages such that if the internet site is again visited the browser apparatus can at least partially construct the page of the site from the data held in the storage means. However this process can require very large amounts of storage space to be available and utilised which is particularly inappropriate for the embedded form of browser apparatus.

A further, significant, limiting factor for this process is image size. Whilst, in the generation and design of an internet site page, the use of HTML data allows a page author to specify the on-screen dimensions of a given image, this is not mandatory, and many internet site pages omit the size details. The web browser apparatus then has to either wait until it has downloaded enough of each image to determine its dimensions before it continues to lay out the page, or it has to continually reformat the page as image sizes become known. This can cause flicker, or require a full screen backing store, which requires and uses a lot of RAM. The solution web browsers currently implement, if any, is to cache the entire image locally but as the data for these images can be very large it is only rarely that the storage means store images for more than a few hours or days after the same have been visited by the user.

The aim of the present invention is to provide an internet page access system which overcomes the usual trade off of storage means capacity against the page rendering problems in terms of speed.

In a first aspect of the invention there is provided web browser apparatus, said web browser apparatus including a communications link to an internet service provider, thereby allowing the user selection of an internet site and the generation and rendering of one or a number of pages of the internet site on a display screen connected to or forming part of said web browser apparatus, one or more pages including one or more images and characterised in that said web browser apparatus further includes storage means in which data indicating the size or sizes of said one or more images provided in a selected internet site web page is/are stored.

Typically the storage of the image size data is only carried out when an image is included in the selected page and there is no image size data included in the HTML data relating to the selected internet site.

Thus in accordance with the invention, web browser apparatus can lay the web page out referring to the storage means, and if any image details for the selected page are in the storage means, the image size data is used, thus preventing the need for subsequent repeated reformatting when the page is selected in the future (unless an image size has changed).

In one embodiment the storage means can be used alongside conventional data storage methods, with the image size data typically being stored for a significantly longer period than the data for the image itself as less storage capacity is required.

According to a second aspect of the present invention there is provided a method of using web browser apparatus, said web browser apparatus including a communications link to an internet service provider, said method including the steps of user selection of an internet site, generating and rendering one or more pages of the selected internet site on a display screen connected to or integrally formed with said web browser apparatus, and characterised in that said method further includes identifying image size data relating to one or more images displayed on said web page or pages and storing said image size data in storage means connected to or integrally formed with said web browser apparatus.

According to a yet further aspect of the present invention there is provided a broadcast data receiver (BDR), said BDR receiving and processing data from a remote location, said BDR provided with web browser apparatus, said BDR and/or web browser apparatus including a communications link to an internet service provider, said web browser allowing the user selection of an internet site and the generation and rendering of one or a number of pages of the internet site on a display screen connected to or forming part of said web browser apparatus and/or BDR, one or more of said pages including one or more images and characterised in that said web browser apparatus further includes storage means in which data indicating the size or sizes of one or more images used in a selected internet site web page is/are stored.

A specific embodiment of the invention is now described with reference to the accompanying figure wherein:

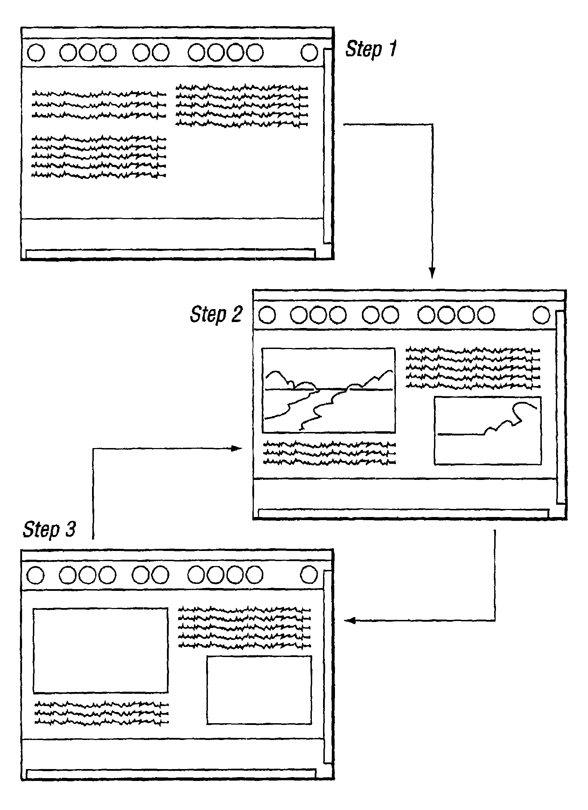

Figure 1 illustrates an internet site page comprising a number of images.

The aim of the invention is to avoid, or provide an alternative or complimentary system, to the need to store data for entire images of an internet site page in a large local storage means. By overcoming this need so less storage space whether it be RAM or hard disc drive space is required.

When the web browser apparatus is used to select and retrieve an internet site and/or a page of the same it can frequently, when rendering or constructing the pages on the display screen encounter an image embedded in a web page with no indication of that image size (an "unsized image") in the HTML data. In accordance with the invention, when the image is constructed on the page, the apparatus stores the dimensions of the image, typically obtained by fetching and decoding that image, along with the Uniform Resource Locator (URL) or identifiers of the pages from which it was fetched and this data is stored in the storage means. This requires only, say, three words to store time, width and height plus the number of bytes taken by the URL itself, and forms what is called an "image history" in the storage means.

Thus whenever the web browser subsequently encounters unsized images in pages, it checks the image history to see if it has stored sizes for the image URL it is attempting to construct at that time. This is of use not only when revisiting a page seen previously, but also for sites which reuse the same graphics throughout their pages with no size hints. If the web browser identifies that it has relevant stored image size data, it lays the page out using the stored size data and so when the image is fetched the real size can be compared with the stored size.

If the "real size" turns out to be different from the values in the history, the browser can reformat the page as it would have done if the present invention was not available, and update the history with the actual sizes. If, however, the image matches, as it usually will, no reformat of the page is needed and so the page which will be presented for viewing by the user much earlier than would have been the case by waiting for receipt of the downloaded data and the page fetch will appear smoother from the user perspective. It will also make more sense when initially presented, as the fixed size "placeholders" or windows for the images that would usually be used can be replaced with more intelligent/accurate estimates of image size based on the image history data.

This is particularly important with many table-based web pages which rely on carefully aligned images for layout purposes. An image history has clear advantages over storing the entire image itself in a conventional storage means, since it uses considerably less storage space and therefore the image size data can be held for a much longer time, e.g. one or two months rather than one or two days in devices with limited storage space.

It should be appreciated that the invention does not necessarily prevent conventional image data storage from occurring and this can be performed alongside the current invention, with complete replacement being optional.

Image dimension data is typically only stored in the storage means when an image in the HTML is encountered with no absolute size provided. This significantly reduces the number of images stored in the history for typical web pages, and therefore reduces overall data storage and so the duration for which an image may stay in the history before being flushed out is increased. Removal or flushing of the image size data can be undertaken on the basis of storage means capacity and/or the length of time the data has been stored in the storage means in a conventional manner. Associating a time with each entry of size data in the storage means and updating that time whenever the size information is used or updated is, then, a preferred requirement for the efficient operation of the system.

In a specific example, of the conventional system a broadcast data receiver is provided for the reception and processing of data transmitted from a remote location. The receiver is also provided with embedded web browser apparatus with a storage means in accordance with the invention but which for the purposes of illustration commences with no image size data therein. In the internet function the user selects an internet site, and the page as displayed in the steps 1 -3 described below:
Step 1 - A web page is downloaded for the first time by the user. Image sizes are not known by the web browser apparatus and the
Step 2 - Downloading of the web page is completed. Two images 2 are present on the display screen. The text of the web page has been reformatted around the images 2.
Step 3 - When any page containing the images 2 is downloaded again, the image sizes have been stored in the storage means of the web browser apparatus and so even though the image data itself is not cached, the page is laid out providing the correct window sizes for the images. Step 1 is therefore not repeated until the image size data for the web page is flushed/removed from the storage means.

Referring in more detail to steps 1-3, in rendering the web page on the display screen the browser apparatus fetches from the downloaded data the text but it includes several images with no size data provided. As each of the images is fetched and the browser determines their size, the page is laid out again. This causes flicker and consumes processor time. If the user has started navigating the page with, for example, an infra red (IR) remote control handset, the navigation may be jerky and unreliable as the receiver processor has to keep spending time laying out the page for each newly discovered image size.

If the user then directs the web browser, for example, to the web site http://www.planetquake.com/, which when printed is 15 page A4 size and is an extremely bandwidth intensive site using lots of images, then if the conventional storage method was used for storing all the data relating to the images in the storage means for the first site, then this data would have to be immediately removed or flushed from the storage means due to the need for storage capacity to cope with the image data required to be stored from this new site. Thus if the user returns to the first site, the image data is no longer in the storage means due to the requirement for the same to be flushed, and the user will experience the exact same repeated reformat problem of steps 1 and 2. This is typical behaviour for many different sites using "unsized" images.

However, if the above process was repeated using the same apparatus but in accordance with the present invention, the image size data for each image 2 in the first site is stored in the storage means and identified with respect to the specific URL. Thus when the user visits the Planet Quake site the image size data is retained in the storage means and image size data for the Planet Quake site can be added to the storage means. As the image size history for the first site image sizes is relatively small, the first site image sizes can be retained for a significant time period such as many days after the site was first visited. When the user returns to the first site, step 3 of Figure 1 is implemented and the browser uses the image size history to lay out the web page with intelligent estimations of the image sizes. If the images have changed it may need to reformat as before, but in the vast majority of cases the image size data retrieved from the storage means will be correct, and no reformatting is required. The user sees a swift and accurate page fetch and can smoothly navigate around the page even though images are still being fetched.

In accordance with the invention the web browser remembers only the dimensions of the images and so does not have to wait until enough data of an image is downloaded from the communications link before rendering or laying out the page, or alternatively, repeatedly formatting the page as the image sizes become known from the data which is downloaded via the communications link.

Thus in accordance with the invention the rendering of the web page can be faster and smoother than with conventional systems from the perspective of the user, and the apparatus requires less storage capacity such as RAM and potentially less processor power thus reducing the apparatus hardware costs.

## Claims

1. Web browser apparatus, said web browser apparatus including a communications link to an internet service provider, thereby allowing the user selection of an internet site and the generation and rendering of one or a number of pages of the internet site on a display screen connected to or forming part of said web browser apparatus, one or more of said pages including one or more images and **characterised in that** said web browser apparatus further includes storage means in which data indicating the size or sizes of said one or more images used in a selected internet site web page is/are stored.

2. Web browser apparatus according to claim 1 **characterised in that** image size data is stored when there is no image size data available in the HTML data relating to the selected internet site.

3. Web browser apparatus according to claim 1 **characterised in that** if the selected internet site web page is subsequently re-selected at some point in the future, said web browser apparatus lays the page out using image size data relating to the selected web page stored in the storage means.

4. Web browser apparatus according to claim 1 **characterised in that** the storage means containing the image size data is separate and/or distinct from conventional data storage means used in relation to the web browser apparatus.

5. Web browser apparatus according to claim 4 **characterised in that** the image size data storage means retains data therein for a longer period of time than the conventional data storage means.

6. Web browser apparatus according to claim 1 **characterised in that** said apparatus fetches and decodes the data relating to said one or more images on a selected web page and stores said decoded image size data in said storage means.

7. Web browser apparatus according to claim 1 **characterised in that** the image size data stored includes any or any combination of time, width, height, URL or other web page identifying means.

8. Web browser apparatus according to claim 1 **characterised in that** time identifying means is associated with the entry of the image size data in the storage means and, on each occasion said image size data is used from said storage means, said time identifying means is updated.

9. Web browser apparatus according to claim 1 **characterised in that** said apparatus is provided in a broadcast data receiver.

10. A method of using web browser apparatus, said web browser apparatus including a communications link to an internet service provider, said method including the steps of user selection of an internet site, generating and rendering one or more pages of the selected internet site on a display screen connected to or integrally formed with said web browser apparatus, and **characterised in that** said method further includes identifying image size data relating to one or more images displayed on said web page or pages and storing said image size data in storage means connected to or integrally formed with said web browser apparatus.

11. A method according to claim 10 **characterised in that** when one or more web pages are selected for display on said display screen, said web browser apparatus searches said storage means for image size data relating to said one or more web pages.

12. A method according to claim 11 **characterised in that** if no image size data is identified in said storage means, said web browser apparatus formats the page in a conventional manner and then identifies and stores image size data from said one or more web pages and stores said data in said storage means.

13. A method according to claim 11 **characterised in that** if image size data is identified in said storage means, said web browser lays the web page or pages out using said image sized data stored in said storage means.

14. A method according to claim 13 **characterised in that** when the web browser apparatus fetches the one or more images relating to said selected web pages, the apparatus compares the size(s) of the image(s) with the stored image size(s) and, if the stored image size(s) is/are different to the fetched image(s), the web browser apparatus reformats the page or pages.

15. A broadcast data receiver (BDR), said BDR receiving and processing data from a remote location, said BDR provided with web browser apparatus, said BDR and/or web browser apparatus including a communications link to an internet service provider, said web browser apparatus allowing the user selection of an internet site and the generation and rendering of one or a number of pages of the internet site on a display screen connected to or forming part of said web browser apparatus and/or BDR, one or more of said pages including one or more images and **characterised in that** said web browser apparatus further includes storage means in which data indicating the size or sizes of said one or more images used in a selected internet site web page is/are stored.
